# EUROPEAN PATENT APPLICATION

(11) **EP 4 692 537 A1**
(43) Date of publication of application: **11.02.2026**
(21) Application number: 24777349.2
(22) Date of filing: 29.03.2024
(51) Int. Cl.: F03D 80/00, F03D 80/50, F03D 1/00, F03D 1/06, B66C 1/10, F03D 80/70, B23P 6/00

(54) **WIND TURBINE BLADE REPAIR METHOD**

(30) Priority: 30.03.2023 BR 102023006041
(71) Applicant: Advanced Composite - Solucoes em Materials Compostos Ltda em Recuperacao Judicial, 18078-005 Sorocaba, São Paulo (BR)
(72) Inventor: LEMOS, Phillips Antonio da Costa, 18078-005 Sorocaba (BR)
(74) Representative: Wynne-Jones IP Limited
(86) International application number: PCT/BR2024/050131
(87) International publication number: WO 2024/197378

(57) **Abstract**

The present invention relates to a method for repairing wind turbine blades comprising removing the root of the blade and replacing it with a new one, said method adopting an indexing device, blade sectioning phases, chamfering, technical preparation of the connection, positioning the new root using the indexer, external sealing, external lamination, removal of the indexer, internal sealing, installing layers of laminated fabrics on the external region of the connection; installing layers of laminated fabrics on the internal region of the connection; perform the vacuum infusion step of the laminated layers with an epoxy resin; install the cores, close-out, steel ring of the inserts, and other blade accessories, such as lightning rods; perform the finishing and painting of the blade; perform the rebalancing of the blade.

## Description

### TECHNICAL FIELD

The present invention relates to a method for repairing wind turbine blades.

### STATE OF THE ART

Although the blades manufactured in the last 20 years have undergone a more than expected and natural "expiration" - aging of the blades - the "passage of time" is not the only reason or impacting element capable of and responsible for failures - it has been observed in the wind energy market, in Brazil and worldwide, that numerous wind farms whose 'turbines' or wind turbines have suffered, and continue to suffer, significant impacts due to failures in the original attachment of the metal element to the blade; and consequently to the turbine 'hub'.

Thus, it has been clearly verified that - whether due to problems or systemic failures in development and design, possibly in compliance with manufacturing processes, methods, and materials and/or others - the metal "inserts" end up suffering chronic, serious failures or breakdowns, which invariably evolve into catastrophic loss of adhesion to the blade laminate, potentially causing disastrous failures such as the blade detaching from the turbine hub, with no possibility of returning to *the status quo ante.*

It is worth noting that this type of problem occurs more frequently in blades manufactured with polyester resins, whereas in blades manufactured with epoxy resins, the occurrence is notably less relevant.

Although failure or breakdown occurs quite randomly with regard to the multitude of existing types/models, we can infer a particular chronicity in families/models of blades whose designs/processes and/or materials refer to a specific time gap, manufacturer, and/or global region of origin.

A relevant fact concerns the seriousness of the issue, given that, up until now, there were no solutions on the market that were proven to be capable, concrete, and tangible enough to truly "save" such blades from inevitable disposal.

It is important to note the long-standing and undeniable need to replace these blades, further aggravating problems that are already chronic in the manufacturing market in question, such as the high price of replacement blades, the inability of this market to meet existing and future demand, the particularly elastic delivery lead *time,* as well as the high energy generation losses due to machine downtime.

There are several solutions in the prior art for repairing or reinforcing the connection between the blade root and the bearing, such as WO2022157391A1, CN113320193A, US11092132B2, US10982658B2, US2020/0263,658A1, US20200102938A1, GB2569297A, and US20100158661A1. These solutions involve replacing and/or reinforcing the connection between the metal insert and the blade root. The solution described in document US11092132B2 suggests the possibility of manufacturing a blade root separately from the rest of the blade.

### TECHNICAL PROBLEM

The methods described in the aforementioned documents and other prior art do not comprehensively address the various problems associated with repairing wind turbine blades with defects in the connection between the blade root and the insert. More particularly, solutions involving the replacement and/or reinforcement of the connection between the metal insert and the blade root eventually result in further failure, given that reinforcements or replacements have a limited capacity to redistribute the enormous mechanical stresses to which the root region is subjected. The solution provided in document US11092132B2 does not reveal an adequate way to connect the root to the rest of the blade, nor how to make an adequate connection between the "inserts" and the blade root, especially in the case of repairing blades already in operation.

### TECHNICAL SOLUTION

To overcome the drawbacks and problems described above and other disadvantages not mentioned here, in accordance with the objectives of the invention, as incorporated and broadly described herein, one aspect of the invention is directed to a method of manufacturing wind turbine blades, the method comprising:
a) removing the blade root seal (*close out*), the core, and the steel ring (flange) from the original blade root inserts;
b) fixing at least one internal and/or external indexing device to the blade body;
c) sectioning the blade into two parts, one part being the blade root and the other part being the remaining blade body, while keeping the indexing device fixed to the remaining blade body;
d) chamfer a portion around the outer face of the cut end of the remaining blade body;
e) chamfer a portion around the inner face of the cut end of the remaining blade body;
f) technically prepare the inner and outer surfaces of the remaining blade body, with the aid of blasting equipment, using water and glass grit to obtain a rough surface to anchor the connection between the polyester resin laminate of the old blade and the new epoxy resin root;
g) position a new root respecting the expected angular coefficient, inclination, zenith angle, and plane of rotation, considering the previous indexing of the remaining blade body;
h) attach the new root to the remaining body of the blade, said attachment including external sealing consisting of the application of at least two layers of chopped fiberglass blanket, for example preferably with a density of 800 g/m² and epoxy resin for lamination by manual lamination of resin plus fiberglass (*hand lay up*) of the connection between the new root and the remaining body of the blade, wherein the curing of the compound is carried out for a predetermined period according to the characteristics of the material, for example preferably for 4 hours at 65 °C;
i) remove at least one indexing device;
j) perform internal sealing consisting of applying at least two layers of chopped fiberglass blanket, for example preferably with a density of 800 g/m² and epoxy resin for manual resin plus fiberglass lamination (*hand lay up*) of the connection between the new root and the remaining blade body, in which the compound is cured for a predetermined period according to the characteristics of the material, for example preferably for a period of 4 hours at 65 °C;
k) install layers of laminated fabrics on the outer region of the connection;
l) install layers of laminated fabrics in the inner region of the connection;
m) perform the vacuum infusion step of the laminated layers with an epoxy resin;
n) install the cores, blade root seal (*close out*), steel ring of the inserts, and other blade accessories, such as lightning rods;
o) finish and paint the blade;
p) rebalance the blade.

### ADVANTAGEOUS EFFECTS

The present invention offers several advantages over the prior art.

It is undoubtedly a specific technical-structural and operational solution that aims to resolve chronic failures or defects originating and existing at the interface between the metal fastening elements of the blade and the laminated composite material, thus allowing full and capable operational continuity in the us - and reuse - of original blades that may have been previously condemned due to previously irreparable failures.

In particular, the present invention allows the coupling or joining or adhesion of different and/or combined polymers, including epoxy/polyester, in the fully functional replacement of the original blade root and definitive fastening or adhesion of the structural elements by a new root, independent and preliminarily manufactured from the remaining body of the blade.

### BRIEF DESCRIPTION OF THE DRAWINGS

Hereinafter, the present invention will be described in combination with the figures and modes of execution.
Fig. 1 shows the blade *closeout* arranged inside the blade and sectioned from its installation location.
Fig. 2 is an image showing the stage of removing the steel ring or metal flange from the blade root.
Fig. 3 is an image illustrating the step of fixing the indexer to the blade root.
Figs. 4A and 4B are representations of the steps of cutting and disassembling the segment, including part of the blade root.
Fig. 5 shows the step of chamfering part of the outer face at the end of the remaining body of the blade.
Fig. 6 shows the technical preparation phase of the inner surface of both elements to be subsequently bonded.
Figs. 7A and 7B show the positioning phase of the new blade root next to the remaining blade body.
Figs. 8A and 8B show the sealing phase of the external connection between the new blade root and the remaining blade body.
Figs. 9A, 9B, and 9C show the first phase of external lamination of the connection.
Figs. 10A and 10B show the first phase of internal lamination of the connection.
Fig. 11 illustrates the stage of installing new cores inside the blade.
Fig. 12 illustrates the installation stage of a new *close-out* (blade root seal) on the repaired blade.
Figs. 13A to 13C show the installation of the steel ring (flange) at the blade root and reconnection of the lightning rod.
Fig. 14 shows the finishing and painting phase.
Figs. 15A to 15B show the blade rebalancing phase.

### DETAILED DESCRIPTION OF THE BEST MODES OF EXECUTION

The present invention involves a method for repairing a blade 10 of a wind power turbine comprising a preferred sequence of steps to be performed as described below.

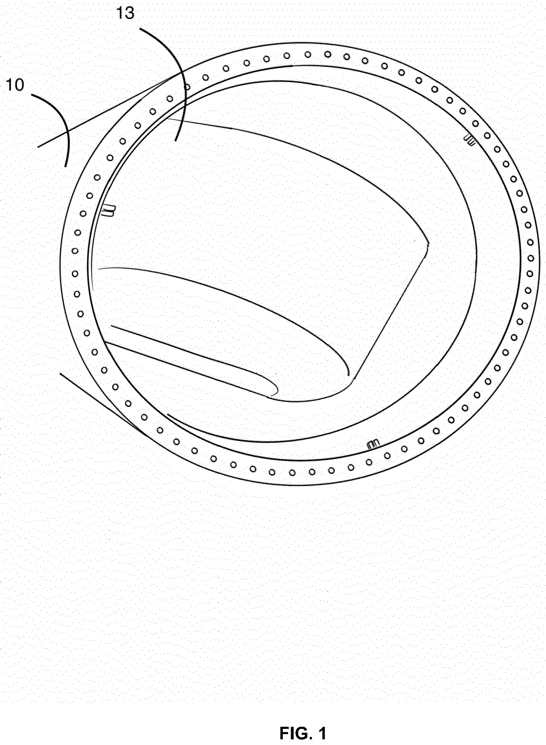

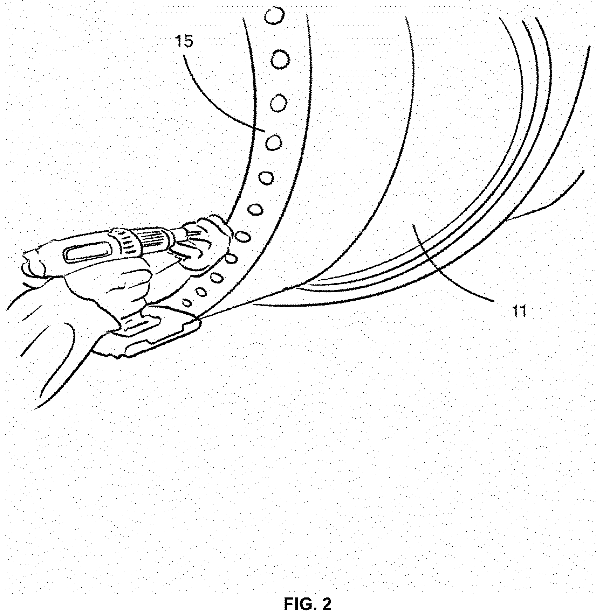

*The closeout* (blade root seal) 13, the corresponding core, and the steel ring (flange) 15 of the original blade root inserts 11 are physically separated from the structure by any appropriate known technique and removed from the blade, as shown in Figures 1 and 2. In this step, the cores 14 are also cut and removed with dimensions on the Z axis corresponding to 2,000 mm from the trailing and leading edges.

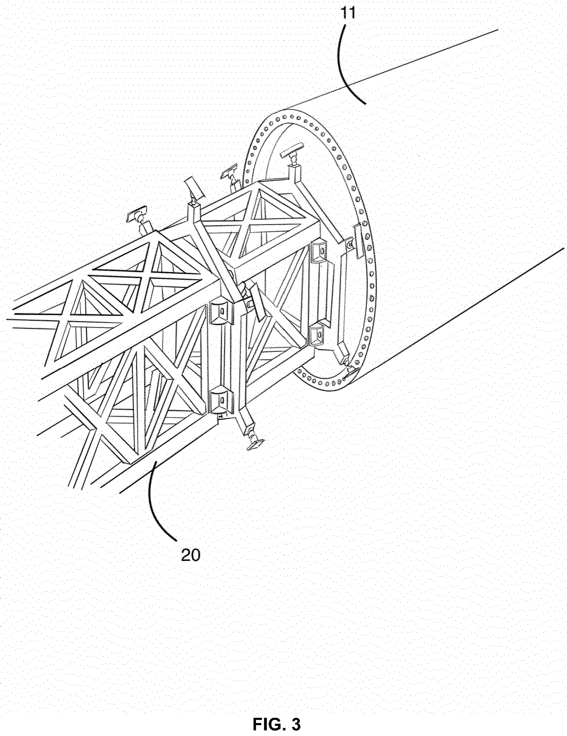

Then, as shown in figure 3, at least one indexing device 20, internal and/or external, depending on the blade model, is inserted and fixed to the blade body 12, still with the original blade root integrated, and installed with the aim of copying and ensuring the references of the original root - plane and orientation for the installation of the new root.

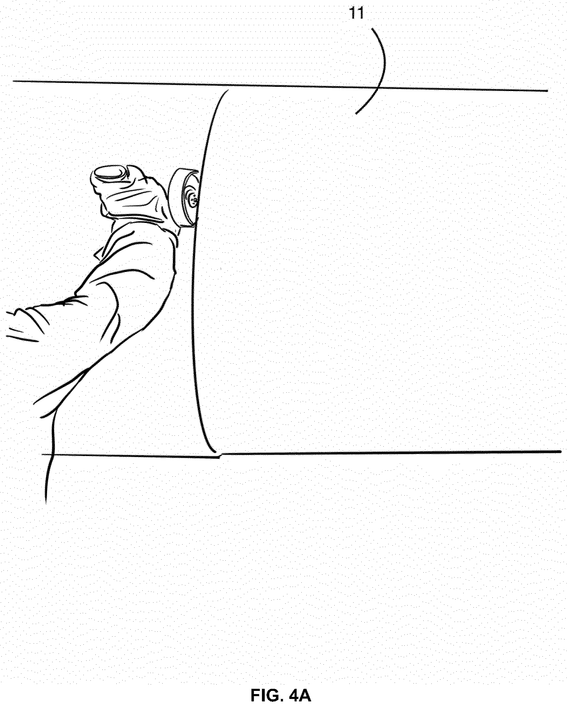

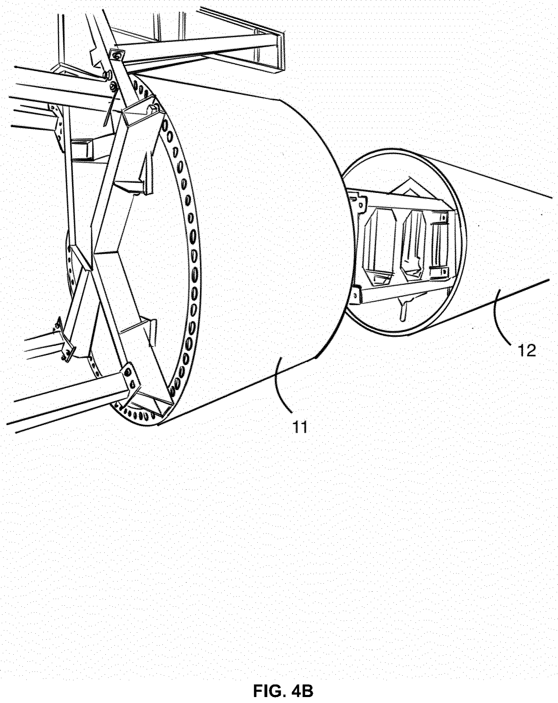

Figures 4a and 4B show that the blade 10 is sectioned into two parts, one part being the blade root and the other part being the remaining blade body 12, keeping the indexing device 20 (inserted in the previous step) fixed to the remaining blade body 12. Next, the original root is cut and removed.

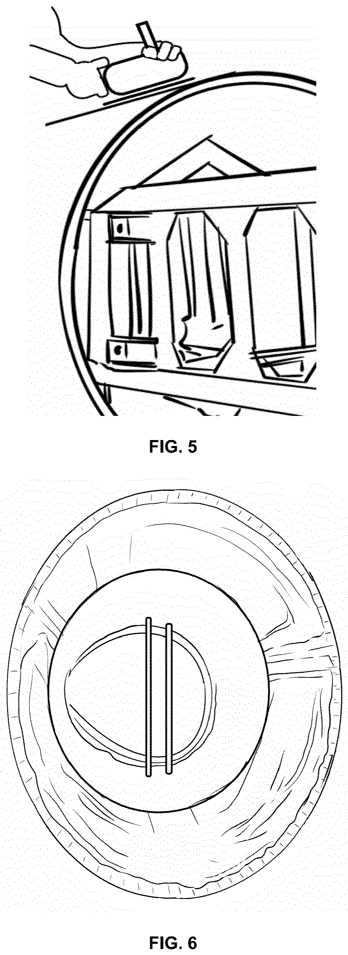

Figure 5 illustrates the stage in which a portion around the outer face of the cut end of the remaining body 12 of the blade is subjected to a chamfering process, as a preliminary preparation for receiving a new blade root. Although not shown in the figures, chamfering is also performed on a portion around the inner face of the cut end of the remaining blade body 12. For example, a 5° chamfer per 500 mm is provided with the aid of a chamfering device, and then the surfaces of the blade 10 to be laminated are prepared, for example, with #36 sandpaper.

Then, as illustrated in Figure 6, a technical preparation stage of the inner (and outer, not shown) surfaces of the remaining blade body 12 begins, with the aid of blasting equipment, for example, using water and glass grit to obtain a rough surface in order to allow the connection between the polyester resin laminate of the old blade and the new epoxy resin root to be anchored.

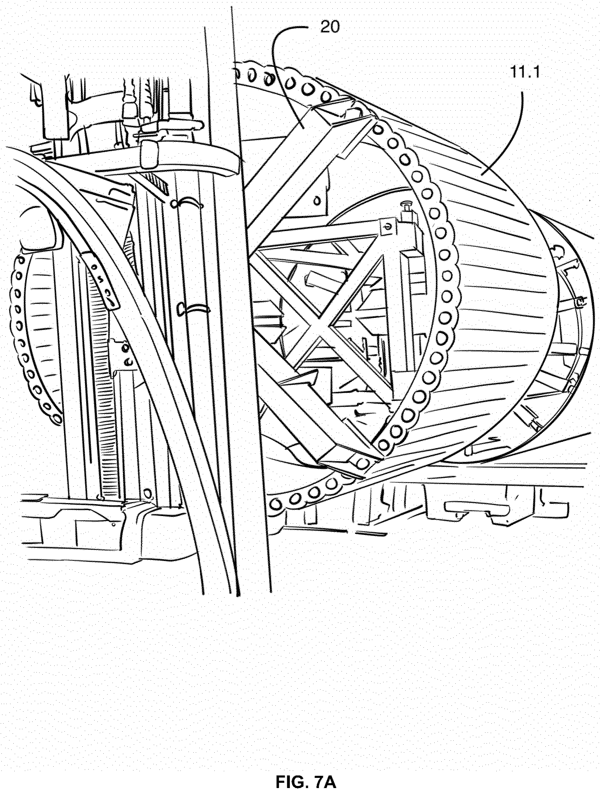

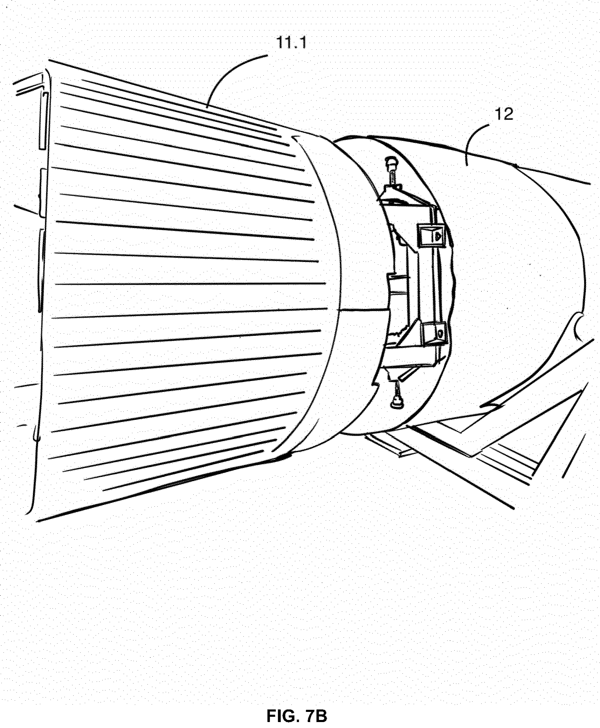

Next, a new root 11.1 is positioned, as shown in Figures 7A and 7B, respecting various parameters, such as the expected angular coefficient, inclination, zenith angle, and plane of rotation, considering the previous indexing of the remaining blade body 12.

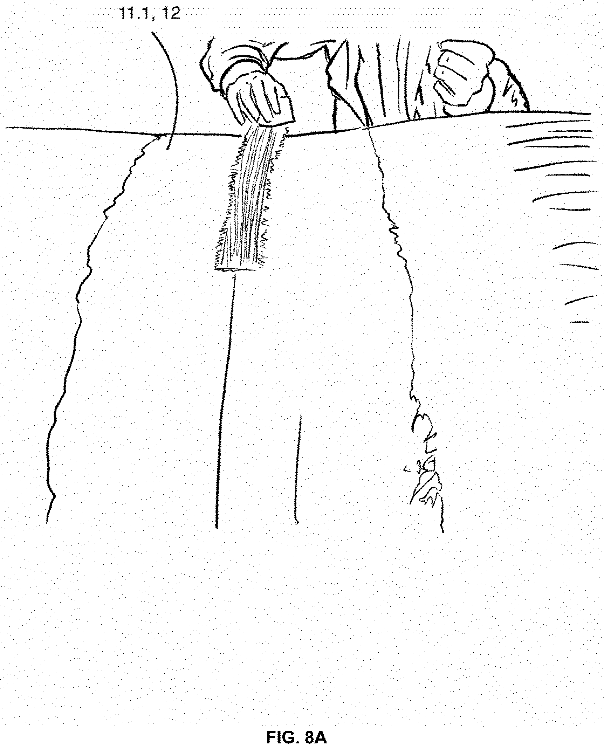

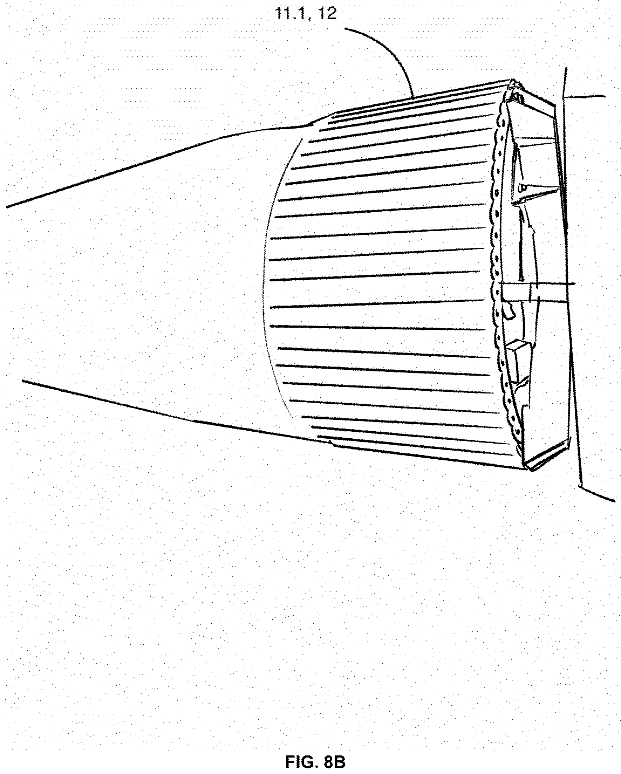

Once the new root has been positioned, the external connection of the new root 11.1 is preliminarily fixed and sealed to the remaining blade body 12, as illustrated in Figures 8A and 8B. In this step, the new root 11.1 is positioned on the blade with the aid of the indexing device 20 and is fixed, for example, with 11 layers of 'E' type fiberglass fabric - UD 989g/m2 - and epoxy resin on the outside, through manual lamination along the 'chamfer' region, around the entire perimeter, followed by the application of Bisphenol 'F'-based epoxy resin on the entire inner and outer surface to promote adhesion between the laminates. The indexing device 20 can then be removed from the structure (step not shown in the drawings).

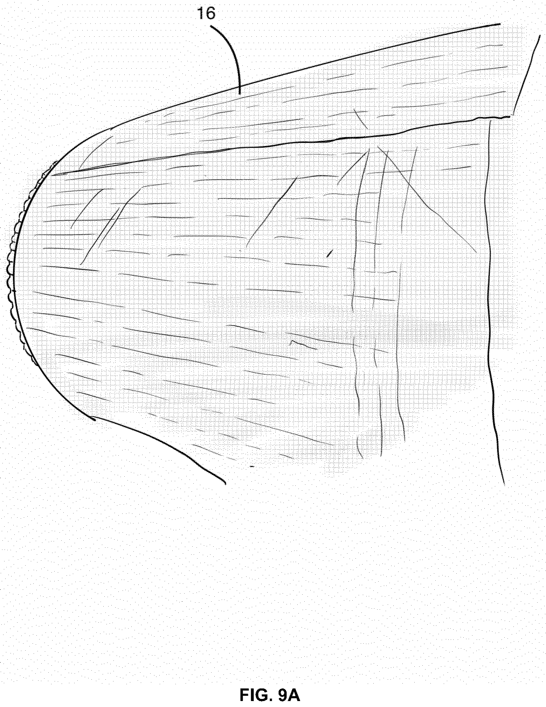

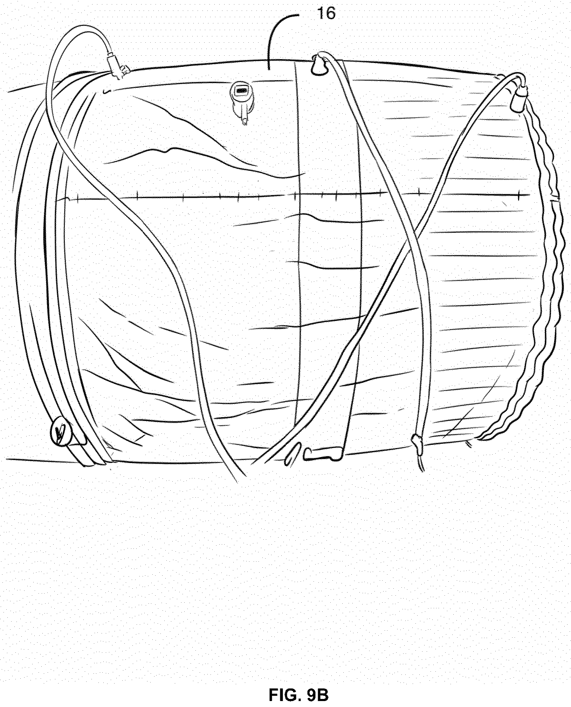

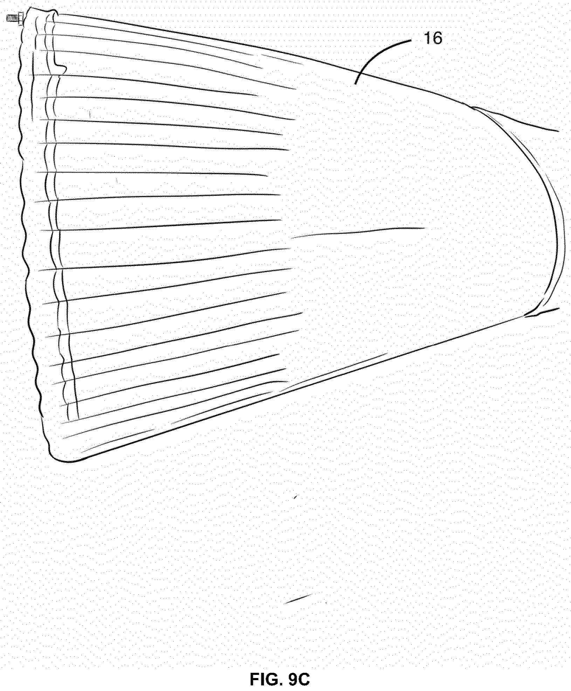

Figures 9A, 9B, and 9C show that said fastening includes an external seal consisting of the application of layers of laminated fabrics on the external region 16 of the connection and, more precisely, at least two layers of chopped fiberglass blanket, for example, preferably with a density of 800 g/m² and epoxy resin for *hand lay-up* lamination (manual lamination of resin + fiberglass) of the connection between the new root 11.1 and the remaining body 12 of the blade, wherein the curing of the composite is carried out for a predetermined period according to the characteristics of the material, for example, and preferably, for 4 hours at 65 °C. More precisely, lamination of the outer surface, 'intrados', is performed exactly at the middle of the circumference from Z = 0 (zero) to Z = 2,300 mm, for example with two layers of biaxial fiberglass fabric type 'E' - Biaxial Fiberglass (Biax 800 g/m² ) and six more layers of UD 989g/m² fabric and two layers of 'E' type biaxial fiberglass fabric - Biaxial Fiberglass (Biax 800 g/m² ) + (06) six layers of UD 989g/m2 fabrics and two more layers of biaxial fiberglass fabric type 'E' - Biaxial Fiberglass (Biax 800 g/m² ).

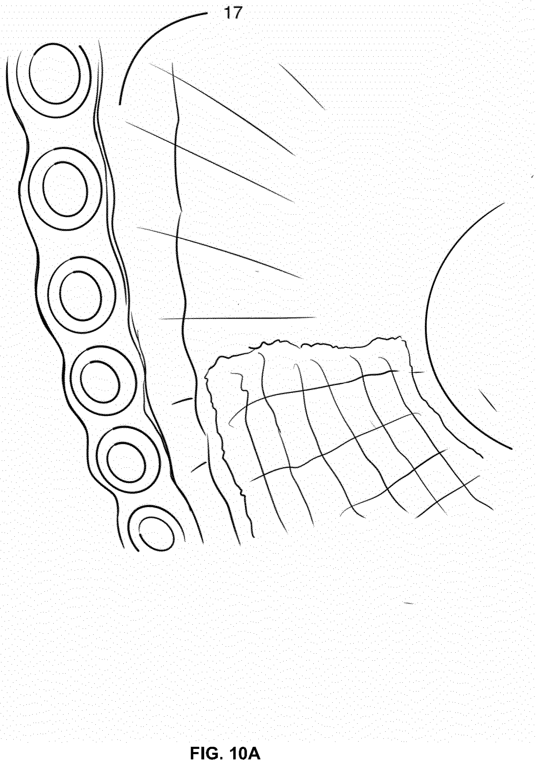

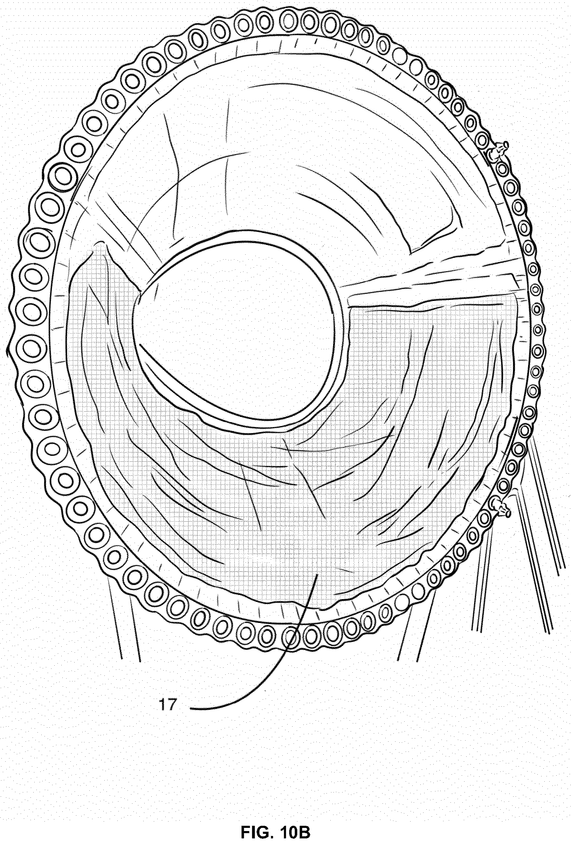

Figures 10A and 10B show the internal sealing process, which consists of applying layers of laminated fabric to the internal region 17 of the connection and, more precisely, at least two layers of chopped fiberglass blanket, for example, preferably with a density of 800 g/m² and epoxy resin for *hand lay-up* lamination (manual lamination of resin plus fiberglass) of the connection between the new root 11.1 and the remaining body 12 of the blade, in which the curing of the compound is carried out for a predetermined period according to the characteristics of the material, for example preferably for a period of 4 hours at 65 °C. In this step, lamination is performed on the inner surface, 'extrados', on half the circumference from Z = 0 to Z = 2,300 mm, for example with two layers of Biax 800 g/m² fabric plus six layers of UD 989 g/m² fabric, two layers of biaxial fiberglass fabric type 'E' - Biaxial Fiberglass (Biax 800 g/m²), six layers of UD 989g/m2 fabrics and two more layers of Biax 800 g/m² fabrics.

Next, the laminated layers are vacuum infused with an epoxy resin (step not shown). In this step, blade 10 is rotated, for example, 180° with the 'extrados' facing upwards; to perform lamination on the outer surface, 'extrados', on half of the circumference from Z = 0 to Z = 2,300 mm, for example with two layers of Biax 800 g/m² fabric, six layers of UD 989g/m² fabric, two layers of Biax 800g/m² fabric, two layers of UD 989g/m² fabric, and two layers of Biax 800g/m² fabric.

Lamination is also performed on the inner surface, inside edge, halfway around the circumference from Z = 0 to Z = 2,300 mm with two layers of Biax 800 g/m² fabric, six layers of UD 989 g/m² fabric, two layers of Biax 800 g/m² fabric, six layers of UD 989 g/m² fabric, and two layers of Biax 800 g/m² fabric.

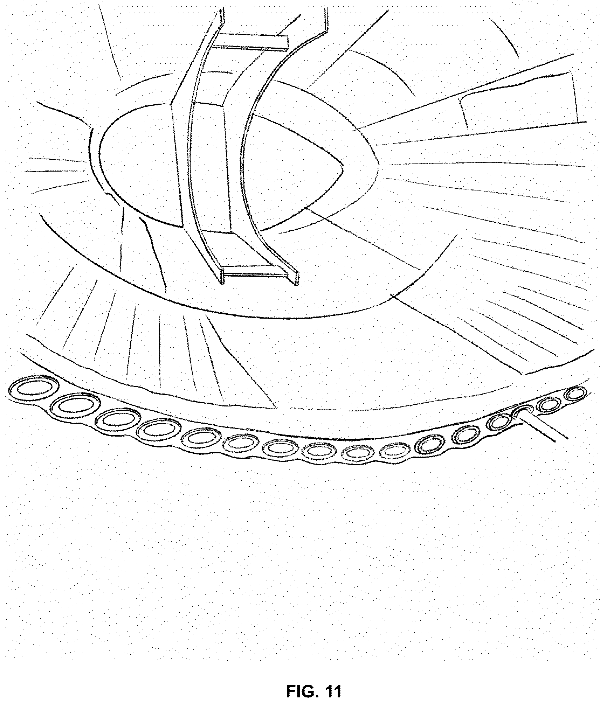

New cores 14, new *close-out* (blade root seal) 13, new steel ring 15 of the inserts and other blade accessories 10, such as lightning rods, are installed in sequence, as shown in Figures 11 (cores), 12 *(close-out),* 13A, 13B, and 13C (flange). The installation of the new cores, shown in figure 11, is done by laminating, for example, three layers of fiberglass fabric 'E' - Biax 800 g/m² - and epoxy resin on the feet of the cores (14) for fixing - cores (14) of the trailing and leading edges.

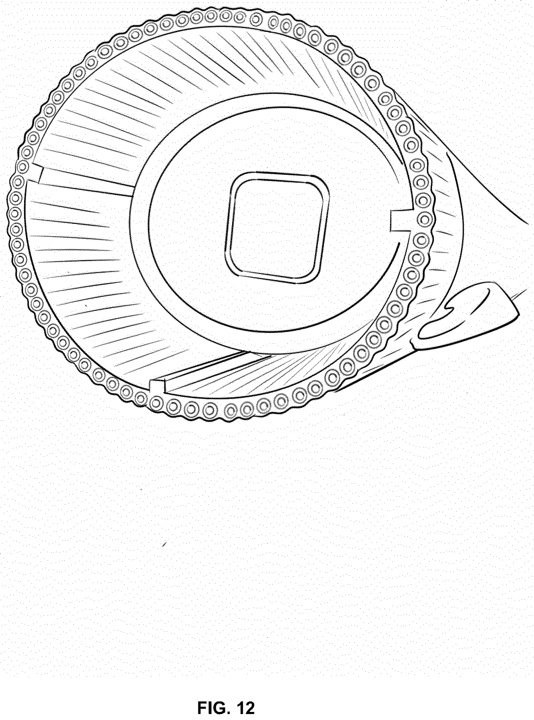

In the case of installing the *close-out* ring (blade root seal) 13 on the inner root of the blade shown in Figure 12, for example, by laminating three layers of fiberglass fabric 'E', 800 g/m² on the inner and outer sides of the ring, followed by the installation of *the close-out ring* (blade root seal) 13 on the ring with the lamination of six layers of fiberglass fabric 'E' - Biax 800 g/m². In order to achieve structural integrity, it is necessary to post-cure the blade root, for example, for eight hours at 80 °C.

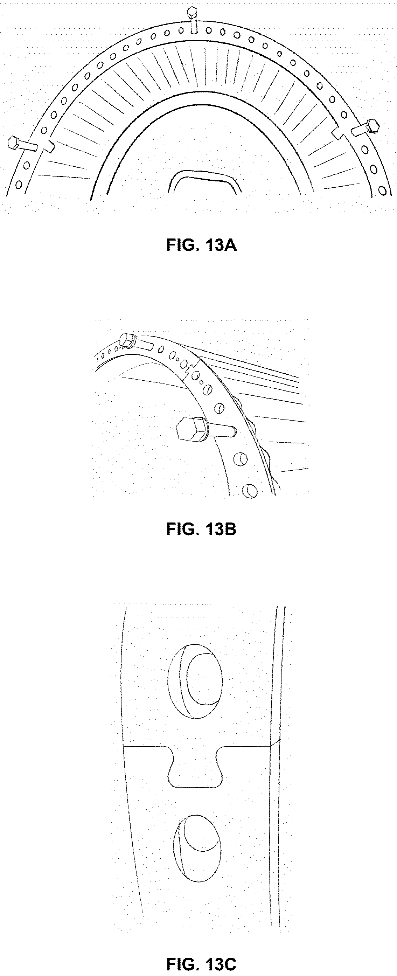

Finally, after post-curing, the metal ring is installed on the metal root face and the lightning rod cable is connected, as shown in Figures 13A, 13B, and 13C.

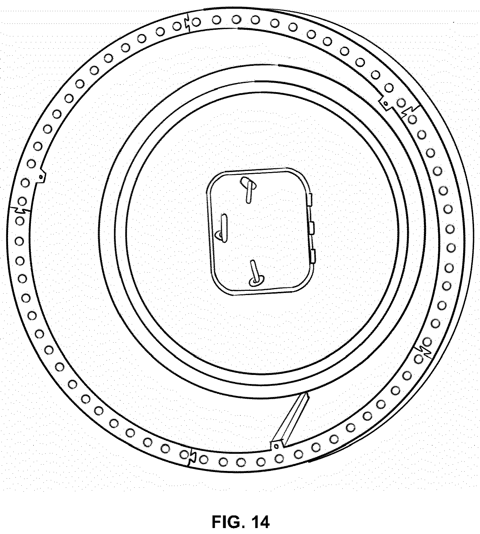

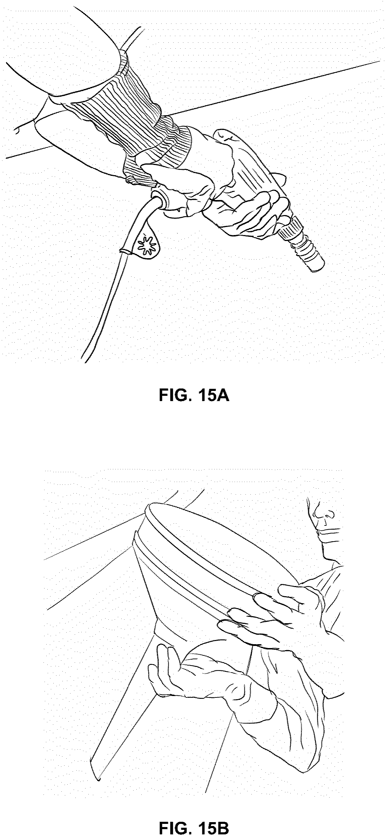

Once the blade structure assembly phase is complete, Figure 14 shows the finishing and painting stage of the part, and Figures 15A to 15B show the blade rebalancing phase, which can be performed by any procedure already known in the technique.

In an exemplary mode of execution of the present method of repairing blades 10, the blade 10 to be repaired is positioned in the support 'cradles' with the 'extrados' facing upwards. Next, the steel ring, flange, or belt 15 at the root of the blade is removed and can be reused, and the *close-out* (seal at the root of the blade) (13) is removed.

Other modifications within the spirit and concept of this invention and evident to a person skilled in the art after consideration of this report should also be considered within the scope of the invention as defined in the appended claims.

## Claims

1. Method for repairing a blade (10) of a wind power turbine **characterized by:**
a) removing the *closeout* (blade root seal) (13), core (14), and steel ring (flange) (15) from the original blade root inserts (11);
b) attach at least one indexing device (20), internal and/or external, to the body of the blade (12);
c) divide the blade (1) into two parts, one part being the root of the blade (11) and the other part being the remaining body of the blade (12), keeping the indexer (20) fixed to the remaining body of the blade (12);
d) bevel a portion around the outer face of the cut end of the remaining body of the blade (12);
e) bevel a portion around the inner face of the cut end of the remaining body of the blade (12);
f) technically prepare the inner and outer surfaces of the remaining body of the blade (12), with the aid of blasting equipment, using water and glass grit to obtain a rough surface to anchor the connection between the polyester resin laminate of the old blade and the new epoxy resin root;
g) position a new root (11.1) respecting the expected angular coefficient, inclination, zenith angle, and plane of rotation, considering the previous indexing on the remaining blade body (12);
h) attach the new root (11.1) to the remaining blade body (12), said fastening including external sealing consisting of the application of at least two layers of chopped fiberglass blanket and epoxy resin for *hand lay-up* lamination (manual lamination of resin plus fiberglass) of the connection between the new root (11.1) and the remaining blade body (12), wherein the curing of the compound is carried out for a predetermined period according to the characteristics of the material;
i) remove the at least one indexing device;
j) perform internal sealing consisting of applying at least two layers of chopped fiberglass blanket and epoxy resin for *hand lay-up* lamination (manual lamination of resin plus fiberglass) of the connection between the new root (11.1) and the remaining body of the blade (12), wherein the curing of the compound is performed for a predetermined period according to the characteristics of the material;
k) install layers of laminated fabrics on the external region (16) of the connection;
l) install layers of laminated fabrics in the inner region (17) of the connection;
m) perform the vacuum infusion step of the laminated layers with an epoxy resin;
n) install the cores (14), *close-out* (blade root seal) (13), steel ring (15) of the inserts and other blade accessories (10), such as lightning arresters;
o) finish and paint the blade (10);
p) rebalance the blade (10).
